# EUROPÄISCHE PATENTSCHRIFT

(11) **EP 0 499 153 B1**
(45) Veröffentlichungstag und Bekanntmachung des Hinweises auf die Patenterteilung: **20.07.1994**
(21) Anmeldenummer: 92102026.9
(22) Anmeldetag: 07.02.1992
(51) Int. Cl.: F16L 55/162, F16L 55/18

(54) **Verfahren zum partiellen Sanieren eines im Erdreich verlegten Abwasserkanals**
Process for partially restoring a sewer buried in the ground
Procédé pour la restauration partielle d'un égout enterré

(30) Priorität: 12.02.1991 DE 4104185
(43) Veröffentlichungstag der Anmeldung: 19.08.1992
(73) Patentinhaber: Müller, Hans, D-32816 Schieder-Schwalenberg (DE)
(72) Erfinder: Müller, Hans, D-32816 Schieder-Schwalenberg (DE)
(74) Vertreter: Stracke, Alexander, Dipl.-Ing.

(56) Entgegenhaltungen:
- EP-A- 0 161 078
- WO-A-90/05267
- CH-A- 635 181
- DE-A- 3 810 615
- DE-A- 4 021 456
- GB-A- 2 136 912

## Beschreibung

Die Erfindung bezieht sich auf ein Verfahren nach dem Oberbegriff des Patentanspruches 1.

Es ist ein Verfahren zum partiellen Sanieren eines im Erdreich verlegten Abwasserkanals bekannt (DE 39 22 351 A1), bei dem eine einlagige, harzgetränkte Fasermasse verwendet wird, die auf einen schlauchförmigen, durch Druck radial verformbaren Träger gewickelt wird und sich überlappende Enden aufweist. Bei diesem Verfahren wird eine Überlappung über einen Winkelbereich von 90° bei der Anlage an der Innenseite des zu sanierenden Kanals angestrebt.

Bei der Aufweitung der schlauchförmig gewickelten, harzgetränkten Auskleidung bis auf den Innendurchmesser des zu sanierenden Kanalrohres verbleibt der schlauchförmige Träger in einer ortsfesten Lage. Im Bereich der Überlappung des Wickels findet eine Reibung zwischen den sich überlappenden Fasermatten statt. Die gewickelte Auskleidung bewegt sich bei der Aufweitung des Durchmessers auch relativ zum schlauchförmigen Träger, und zwar in umfänglicher Richtung. Auf dem Weg von der Ausgangslage der schlauchförmig gewickelten Auskleidung bis zur Anlage an der Innenfläche des zu sanierenden Kanalrohres unter dem Innendruck des schlauchförmigen Trägers findet eine Deformation der Mattenlagen nicht statt, so daß praktisch kein Harz am Umfang oder stirnseitig austritt. Ein Zusammenpressen der Mattenlage erfolgt erst nach einer Anlage an der Innenfläche des Kanalrohres, so daß das Kanalrohr das Widerlager bei diesem Preßvorgang bildet.

Bei dem bekannten, partiellen Auskleideverfahren wird somit das zu reparierende Kanalrohr, das durch Risse oder sonstige Schäden geschwächt ist, als Widerlager für die Auskleidung verwendet und muß eine hohe, von dem schlauchförmigen Träger erzeugte Anpreßkraft aufnehmen. Hierbei besteht die Gefahr, daß das Kanalrohrweiter zerstört wird.

Der Erfindung liegt die Aufgabe zugrunde, ein Verfahren der im Oberbegriff des Patentanspruches 1 genannten Art so zu gestalten, daß während der Durchmesservergrößerung des Fasermattenwickels unter dem Innendruck des schlauchförmigen Trägers Harz in radialer und axialer Richtung nach außerhalb der Fasermattenlage verdrängt und die Harzeinbringung in Risse oder sonstige Schadstellen des zu sanierenden Kanalrohres verbessert wird.

Diese Aufgabe wird durch die Merkmale des Patentanspruches 1 gelöst.

Bei einer vorteilhaften Ausführungsform des Verfahrens wird zur Festlegung der dem schlauchförmigen Träger zugewandt liegenden, harzgetränkten Fasermattenlage am Träger eine Polyethylenfolie verwendet, die zwischen dem Träger und dem Fasermattenwickel angeordnet ist.

Beim Aufblasen des verformbaren schlauchförmigen Trägers erweist sich, daß die Reibung zwischen der Polyethylenfolie und dem schlauchförmigen Träger größer ist als die Reibung zwischen der harzgetränkten Glasfasermatte und der Polyethylenfolie plus Reibung zwischen Glasfasermatte und Glasfasermatte. Die für die Vergrößerung des verformbaren schlauchförmigen Trägers erforderliche Extralänge an Polyethylenfolie und Glasfasermatte wird durch Verschiebung der jeweils äußeren Lagen zugeführt (Verringerung der Überlappung am jeweiligen Außenumfang). Der Anfang der Polyethylenfolie verharrt am verformbaren Träger in seiner ursprünglichen Position. Dadurch bedingt dreht sich der verformbare Träger beim Aufblasen um einen Winkel, der analog der Umfangsverlängerung ist.

Diese Drehbewegung ist vorteilhaft, weil durch den Aufblasvorgang und der daraus resultierenden Verschiebung der harzgetränkten Glasfasermatten zueinander eine Verdichtung dieser Glasfasermatten erfolgt und Harz am äußeren Umfang der Mattenlage austritt, das durch die Drehbewegung am zu sanierenden Kanalrohr verteilt wird.

Die Wandstärke der partiellen Auskleidung kann durch zweifaches oder mehrfaches Wickeln der einlagigen Fasermatte oder einer mehrlagigen Fasermatte auf den verformbaren Träger bestimmt werden.

Bei dem erfindungsgemäßen Verfahren ist es möglich, den für die Verschiebung der harzgetränkten Fasermattenlagen im Wickel erforderlichen Innendruck des verformbaren Trägers entsprechend dem Durchmesser des zu sanierenden Kanals, der verwendeten Fasermattenmaterialien und der Anzahl der Fasermattenlagen vor der Positionierung im Kanal zu bestimmen und einen definierten Andruck an die zu sanierende Rohrwand festzulegen.

Entsprechend der Beschädigung des Altrohres kann ein schonender Andruck des harzgetränkten Wickels erreicht werden, da die umfängliche und stirnseitige Harzaustragung aus dem Wickel schon während der Durchmesservergrößerung des Wickels beim Aufblasen des Trägers erfolgt.

Weitere Ausgestaltungen der Erfindung ergeben sich aus den Unteransprüchen und der folgenden Beschreibung von Ausführungsbeispielen. Es zeigen:
- Fig. 1.A - 1.E: Imprägnieren der Glasfasermatte auf der Baustelle und die Aufwicklung der imprägnierten Glasfasermatte auf einen Packer,
- Fig. 2.A - 2.E: eine Variante zu 1.A - 1.E,
- Fig. 3.A: einen in Längsrichtung geschnittenen Packer während der Positionierung,

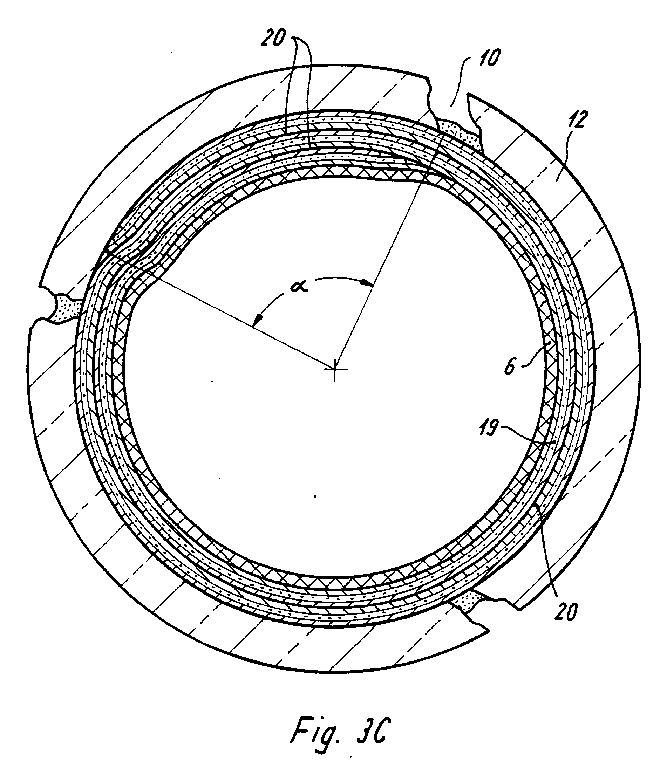

- Fig. 3.B: einen in Querrichtung geschnittenen Packer während der Positionnierung,
- Fig. 3.C: einen Packer mit aufgeblasenem Träger, der zweifach mit einer dreilagigen Fasermatte umwickelt ist, im Querschnitt,

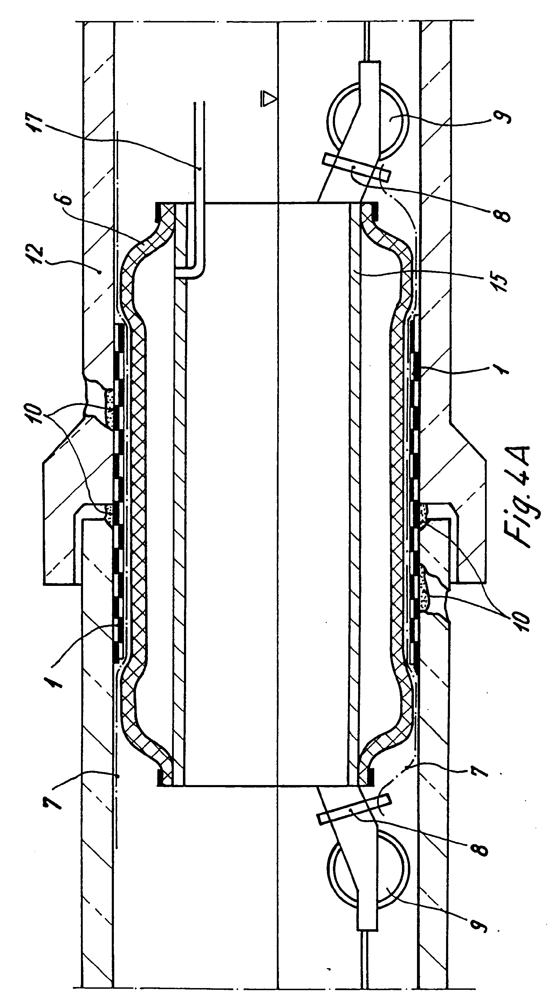

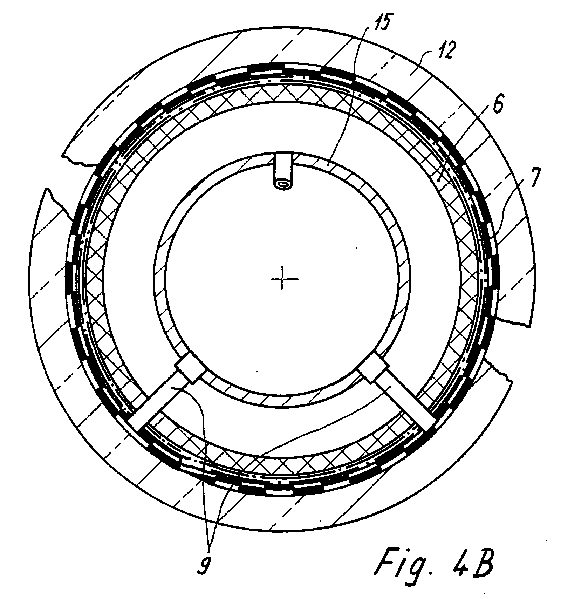

- Fig. 4.A: einen mit Druck beaufschlagten Packer im Aufriß,
- Fig. 4.B: einen mit Druck beaufschlagten Packer im Querschnitt,

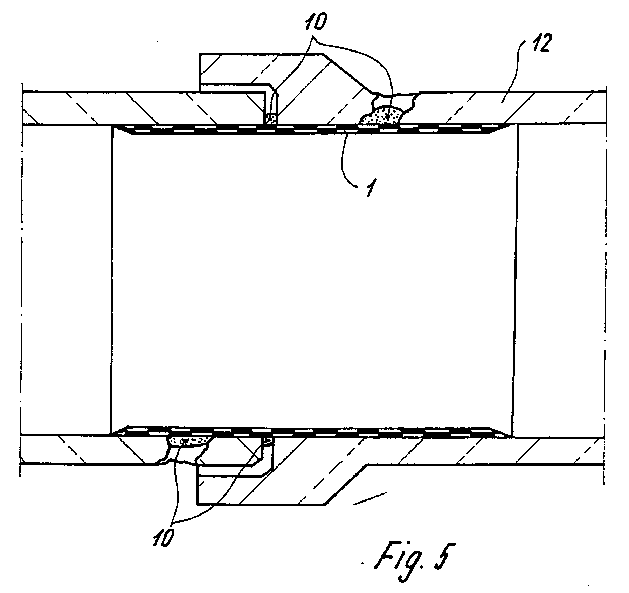

- Fig. 5: eine erfindungsgemäße partielle Sanierung im Längschnitt,

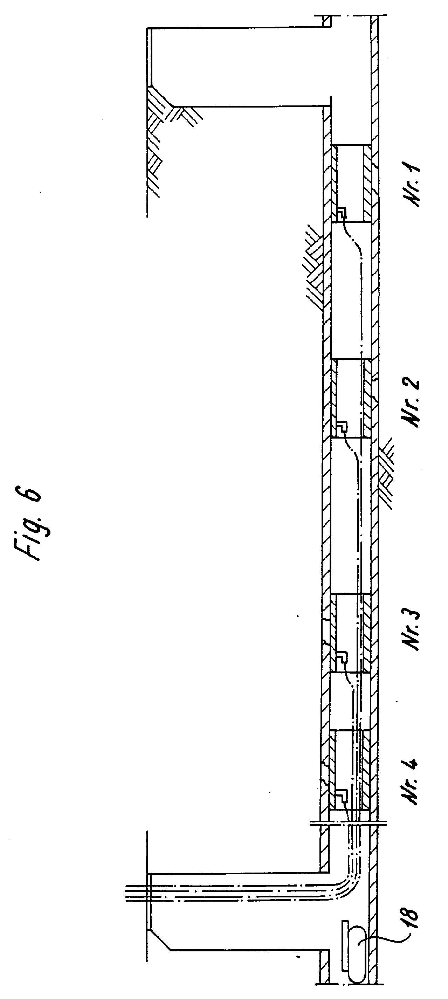

- Fig. 6: eine schematische Darstellung einer vierfachen partiellen Sanierung in einer Haltung.

### Tränkung der Fasermatte

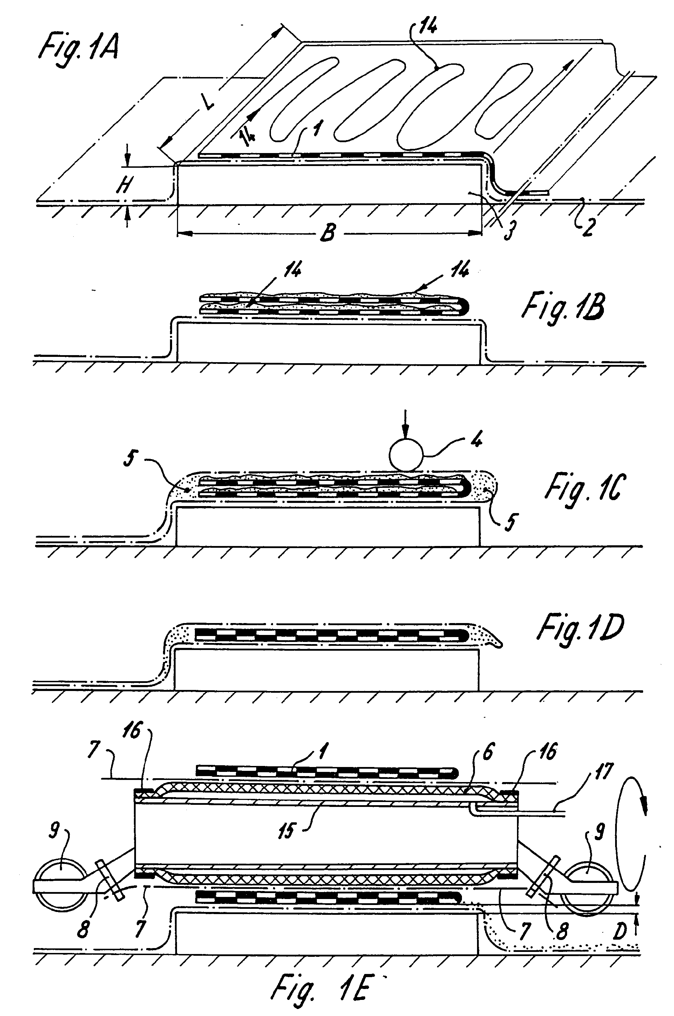

In direkter Nähe einer Maßnahme für partielle Rohrsanierung wird eine plane Arbeitsunterlage 3 der Höhe H, Breite B und Länge L plaziert. Diese Maße der Arbeitsunterlage 3 sind auf die vorzunehmenden Arbeiten abgestimmt. B entspricht etwa der Hälfte der verwendeten Glasfasermattenbreite, L entspricht ca. dem zweifachen Umfang des zu sanierenden Kanals und H ist ein Maß, das das freie Abrollen des Packers erlaubt (Fig. 1.E)

Über die Arbeitsunterlage wird eine transparente Polyethylenfolie 2 gelegt, die gut doppelt so breit ist wie das Maß B und etwas Länger als das Maß L der Arbeitsunterlage. Auf diese Folie wird die zu imprägnierende Glasfasermatte 1 so plaziert, daß die volle Arbeitsunterlage abgedeckt ist. Auf die auf der Arbeitsunterlage liegende Fasermatte wird von Hand fertig gemischtes Harz einigermaßen gleichmäßig aufgetragen 14. Im Anschluß daran wird der außerhalb der Arbeitsunterlage liegende Teil der Glasfasermatte auf die Arbeitsunterlagen umgelegt (Doppellage). Die restliche gemischte Harzmenge 14 wird auf die oben liegende Glasfasermatte verteilt (Fig. 1B). Danach wird die Polyethylenfolie 2 über die Glasfasermatte geschlagen; die Glasfasermatte ist somit allseitig von transparenter Polyethylenfolie umschlossen. Mittels einer Handrolle 4 wird jetzt manuell das Epoxidharz in die Glasfasermatte eingearbeitet (Fig. 1.C). Die transparente Polyethylenfolie erlaubt es, daß Lufteinschlüsse, unvollkommen getränkte örtliche Nester und sonstige Unzulänglichkeiten sichtbar sind und behoben werden können. Durch Rollen in seitlicher Richtung werden Lufteinschlüsse in die seitlichen Bereiche 5 gedrückt (Fig. 1.C). Nach erfolgter porenfreier Tränkung der Glasfasermatte wird die oben liegende Polyethylenfolie zurückgeschlagen; die Glasfasermatte kann auf den Packer gewickelt werden (Fig. 1.E).

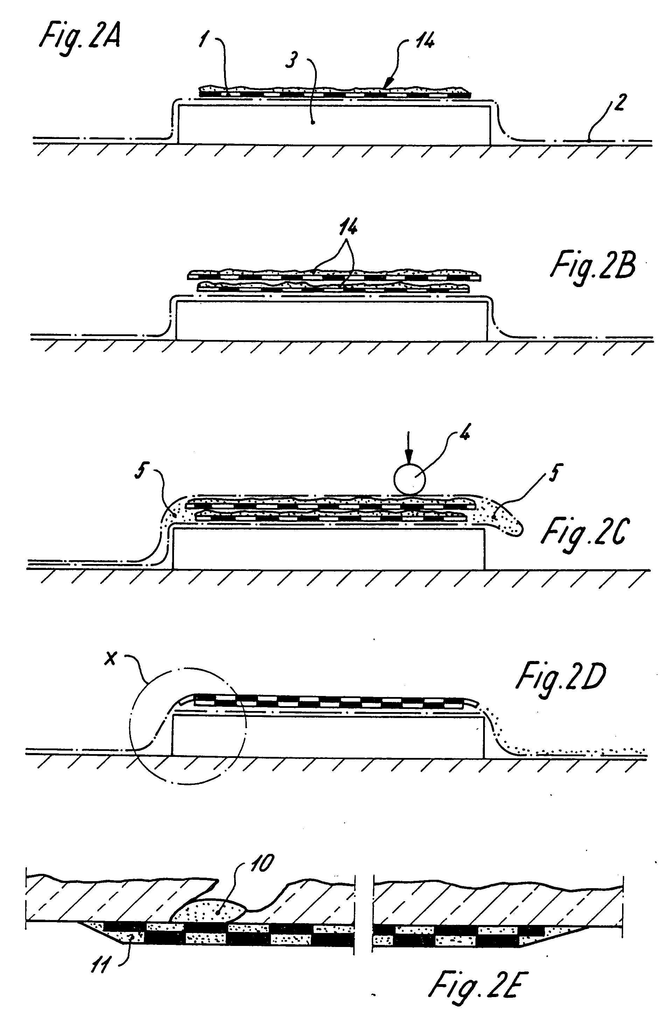

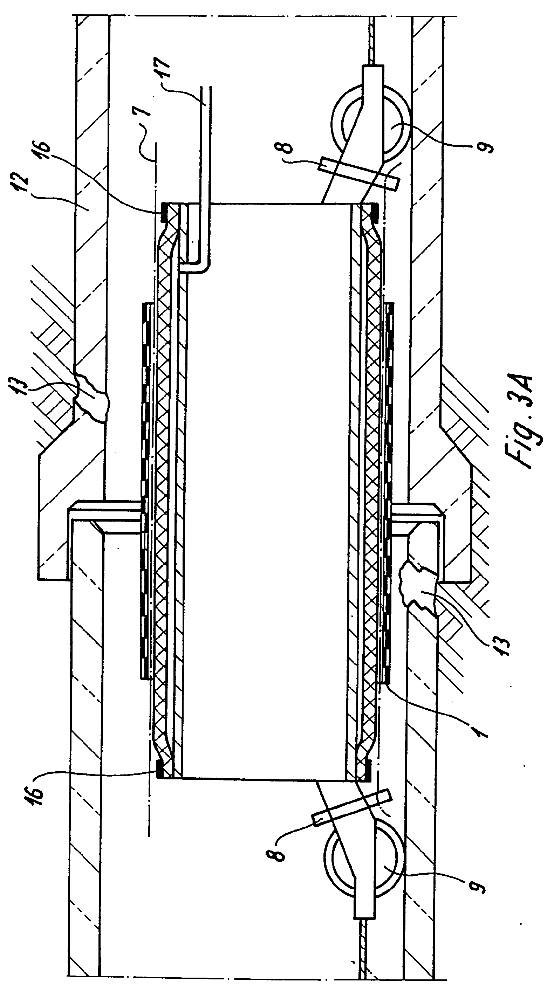

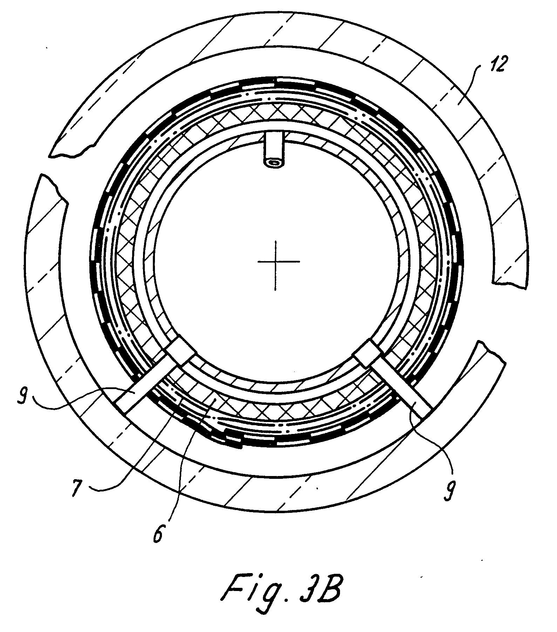

Eine Variante für das Tränken einer Glasfasermatte zeigen Fig. 2A bis 2D. für diese Variante werden Einzellagen aus Glasfasermatte mit aushärtbarem Kunstharz imprägniert.

### Positionieren der Glasfasermatte auf einen Packer

Der Packer weist einen Träger 6 auf, der vorzugsweise aus verformbaren robusten Gummischlauchlängen hergestellt wird, die über ein Metallrohr 15 gestülpt werden und an beiden Enden 16 flüssigkeits- oder gasdicht miteinander verbunden werden. Das Metallrohr 15 ist innen mit einem Anschluß 17 für ein Druckmedium versehen. Der Träger 6 ist aufblasbar, um eine harzgetränkte Fasermatte an der Schadstelle des Abwasserkanals an die Innenseite des Abwasserkanals zu pressen.

Als Fasermatte wird vorzugsweise ein Glas-Roving-Gewebe verwendet, auf welches eine binderlose Glasfasermatte mittels eines Polyesterfadens aufgenäht ist. Als hervorradend geeignet ist eine Fasermatte, bestehend aus 550 g/m² Glasroving-Gewebe, verbunden mit 450 g/m² Glasfasermatte. Eine solche Matte hat eine Dicke von ca. einem Millimeter. Aus Korrosionsgründen wird die Verwendung von E-CR-Glastypen empfohlen.

Als aushärtbare Kunstharze eignen sich besonders Epoxidharze, die entweder bei normaler Umgebungstemperatur härten oder unter Wärmeeinwirkung. Der Harzmischung ist vorzugsweise Haftvermittler beizugeben, da bei der Sanierung von Abwasserkanälen überwiegend auf feuchten Untergründen gearbeitet wird. Es empfiehlt sich ebenfalls, in geringen Mengen "Entlüfter" einzumischen, um Lufteinschlüsse auszuschließen. Beide Additive sind im einschlägigen Handel bekannt.

Faserverstärkte Kunststoffe zeigen umso höhere Festigkeitswerte, je mehr orientierte Faseranteile darin enthalten sind. Das gilt für Glasfasern, Kohlefasern, Kevlar etc. Je höher die praktizierte Festigkeit einer partiellen Rohrsanierung grantiert werden kann, umso geringer ist die erforderliche Wandstärke einer solchen Sanierung. Jede auftragende Sanierungsmaßnahme muß als Reduzierung des Strömungsquerschnittes gesehen werden.

Nach der Ermittlung der Lage und der Abmessung der beschädigten Zone wird eine entsprechend breite harzgetränkte Glasfasermatte, die einlagig oder mehrlagig sein kann, zweifach oder mehrfach um den Packer entsprechenden Durchmessers gewickelt und dieser Packer unter Kamerabeobachtung mittels Seilwinde in den zu sanierenden Kanal eingezogen und positioniert oder mittels selbstfahrender TV-Kamera 18 in den zu sanierenden Kanal geschoben und positioniert. In beiden Fällen ist der Packer mit einer Schlauchleitung für ein Druckmedium gekoppelt. Der Träger 6 des Packers wird mittels Luftdruck oder Flüssigkeitsdruck aufgeweitet, bis sich die mehrlagige getränkte Faserschicht an die Innenwand des Kanals anpreßt. Da die Aushärtungszeit des Epoxidharzes einstellbar ist, kann der Packer nach kurzer Zeit wieder abgeblasen und aus dem Kanal herausgenommen werden. Die partielle Sanierung ist abgeschlossen.

Ein für das vorliegende Verfahren geeigneter Packer wird mit einer Doppellage Polyethylenfolie 7 ummantelt. Die Enden der Folie werden mit Klebestreifen gegen Verrutschen/Abwickeln gesichert. Die Folie 7 steht an den Stirnseiten des Packers über (Fig. 1.E). Die Erstlage der Folie wird im Bereich der Packer-Stirnseiten mittels Plastikbändern (Strapse) an den Halterungen der vier Packerräder fixiert.

Die Polyethylenfolie wird außen zentrisch mit dem Breitenmaß der getränkten Glasfasermatten markiert. Der Packer wird jetzt am Ende der Arbeitsunterlage auf die getränkte Glasfasermatte mittig aufgesetzt, und durch Abrollen des Packers wird die Glasfasermatte auf den Packer stramm aufgewickelt (Fig. 1.E). Die überragenden Räder des Packers befinden sich dabei außerhalb der Arbeitsunterlage.

Ein geeigneter Packer für vorliegendes Verfahren ist mit vier Rädern 9 versehen (Fig. 1. E), die so angebracht sind, daß zwischen aufgewickelter Glasfasermatte und Kanalsohl beim Einbringen des Packers in das zu sanierende Rohr kein Kontakt möglich ist, d.h. es verbleibt ein Abstand D (Fig. 1. E).

Der Packer ist jetzt vorbereitet, um mittels Seilwinde oder einer selbstfahrenden TV-Kamera über einen Einstiegsschacht in den zu sanierenden Kanal eingebracht und positioniert zu werden.

Die als Imprägnierhilfe/Schutzhülle verwendete Polyethylenfolie wird nach dem Abheben des Packers in der Weise zusammengefaltet, daß die harzbenetzte Oberfläche innen zu liegen kommt. Die zu einem kompakten Päckchen zusammengelegte Folie wird für die Entsorgung beiseite geschafft. An ihr haftende flüssige Harzreste härten selbständig innerhalb von zwei bis drei Stunden aus.

### Ausführung der partiellen Sanierung

Der im zu sanierenden Kanal positionierte Packer wird mittels Druckluft oder Druckflüssigkeit aufgeblasen. Dieser Vorgang bewirkt eine Vergrößerung des Packeraußendurchmessers. Die um den Packer gewickelte harzgetränkte mehrlagige Glasfasermatte paßt sich dieser Durchmesservergrößerung durch Verschieben der einzelnen Lagen zueinander an. Zum Beispiel hat ein Packer für die Sanierung eines Rohres DN 400 mm einen Durchmesser 350 mm. Bei zweilagiger Glasfasermatte ergäbe das eine Mattenlänge von 350 mm x π x 2 = 2200 mm. Diese Länge ergibt bei einem Durchmesser 400 mm (Umfang 1256 mm) für noch eine 1,75-fache (2200 : 400 x π = 1,75) Lagigkeit der Glasfasermatte. In der Praxis wird die Länge der verwendeten Glasfasermatte deshalb aus dem Durchmesser des zu sanierenden Rohres errechnet.

Ein weiteres Ausführungsbeispiel ist in der Fig. 3.C aufgezeigt, in der die Auskleidung des Kanalrohres 12 mittels einer harzgetränkten dreilagigen Fasermatte 19 erfolgt, die in zwei Wickellagen um den Träger 6 gelegt wurde. Hinzu kommt eine Überlappung an der dem Träger zugewandten Seite und an der dem Kanalrohr 12 zugewandten Seite über einen Winkelbereich α.

Gleiche Kanalrohrdurchmesser können in einem Arbeitsgang mit unterschiedlich dicken Auskleidungen versehen werden, wobei der dafür erforderliche Träger jeweils mit gleichem Arbeitsdruck beaufschlagt wird. Das heißt, daß harzgetränkte Gesamtlage (gleich Dicke der Auskleidung) aus 1,2,3,4 oder Einzellagen bestehen kann, die jeweils eine Länge von 2 x Umfangmaß des auszukleidenden Rohrdurchmessers plus einer Überlappungslänge von ca. 100 mm haben und diese immer gleichzeitig auf den Träger gewickelt werden, wie dies in der Fig. 3.C aufgezeigt ist.

Die Anwendung ist für die Sanierung örtlicher Rohrschäden konzipiert und es ist dem Fachmann klar, daß solche örtlich beschädigten Rohre nur bedingt Innendrücke während der Sanierung aufnehmen können, ohne völlige Zerstörung zu erfahren.

Für das beschriebene Verfahren sind die Reibungskräfte für das Verschieben der getränkten Glasfaserwickellagen aufeinander bekannt, vorausgesetzt, es wird die empfohlene Mattenlänge (= 2 x Umfang des auszukleidenden rohres + ca. 100 mm Überlappungslänge) eingehalten. Beim Aufblasen des Trägers des Packers müssen sich zwangsläufig die Wickellagen zueinander verschieben. Das Verschieben erfolgt auch bei mehrlagigen Glasfasermatten auf nur einer Verschiebungsfläche 20 zwischen den Wickellagen, der in der fig. 3.C das Bezugszeichen 20 zugeordnet und die verdickt gezeichnet wurde.

Die Reibungskräfte, die für das Verschieben der Wickellagen der Glasfasermatte überwunden werden müssen, sind für gleiche Durchmesser und Standardlängen der Fasermatten gleich. Es können sehr genau die analogen Drücke ermittelt werden, die das Verschieben der Wickellagen der Fasermatte bewirken. Dadurch ist es beim vorliegenden Verfahren auch möglich, einen definierten Anpreßdruck der Auskleidung an das zu sanierende Rohr vorzugeben.

Gesamtdruck Packer = Druck, erforderlich, um die harzgetränkten Glasfasermatten auf Altrohrdurchmesser aufzuweiten + Druck der Auskleidung gegen das Altrohr.

Während des Aufblasens des Packers und der damit verbundenen Verschiebung der Mattenlagen dreht sich der Packer um das sich durch die Durchmesservergrößerung ergebende Maß; der Packer schraubt sich gewissermaßen in den zu sanierenden Bereich des Kanals. Die Drehbewegung ergibt sich aus der großen Reibung zwischen Packer und erster Polyethylenfolien-Lage 7; sie wirkt wie eine Festeinspannung (Fig. 4. B). Durch das Verschieben der Mattenlagen aufeinander erfahren diese Lagen eine Verdichtung zueinander. Das damit verbundene Verdrängen von Harz ergibt, daß dieses Harz in Bereiche gedrückt wird, die außerhalb der Glasfasermatte liegen. Das Harz schafft dadurch einen übergangslosen Angleich 11 an das bestehende Rohr bzw. füllt vorhandene Risse oder Schäden 10 im Rohr auf (Fig. 2.E).

Der Packer verbleibt im aufgeblasenen Zustand, bis die Härtung des Harzes sichergestellt ist. Die Aufhärtzeit kann variabel durch unterschiedliche Mischungsverhältnisse oder Zugabe von Wärme beeinflußt werden.

Nach erfolgter Härtung wird der Packer abgeblasen; der Durchmesser des Packers geht auf Ursprungsdurchmesser zurück. Die um den Packer gewickelte Polyethylenfolie trennt sich dabei leicht vom gehärteten Epoxidharz (keinerlei Haftung) und wird durch die vierfache Befestigung an den Halterungen der Räder 8 mit dem Packer aus der Sanierungszone herausgezogen. Lie partielle Sanierung ist abgeschlossen; das Produkt ist ein dünnwandiges hochfestes Rohrsegment, das sich übergangslos dem bestehenden Rohr anpaßt.

### Allgemeines zum Verfahren

Es empfiehlt sich, während der kurzen Zeit des Einführens und der Positionierung des Packers den Durchfluß des Kanals zu stoppen. Nach erfolgter Positionierung des Packers stört der Durchfluß die partielle Sanierungsmaßnahme nicht mehr; die für das Verfahren verwendeten Packer sind Hohlpacker, die dem Durchfluß nicht hinderlich sind (Fig. 4.A).

Die Verwendung von Polyethylenfolie als Trennmittel und als Mittel zur kontaktlosen Imprägnierung der Glasfasermatte erlaubt physiologisch völlig unbedenklichen Umgang mit Epoxidharzen und eine vorbildliche Handhabung und Entsorgung von Epoxidharzrückständen. Zu keiner Zeit ist Personal oder Umwelt in Kontakt mit flüssigem Epoxidharz.

### Das Positionieren mehrerer Packer in einer Kanalhaltung

Unter Kanalhaltung versteht man die Kanalstrecke zwischen zwei Einstiegsschächten. Es kommt in der Praxis häufig vor, daß eine Kanalhaltung mehrere partielle Schäden aufweist. Vorliegendes Verfahren ist geeignet, nacheinander mehrere Packer beschriebener Art in einer solchen Haltung zu positionieren (Fig. 6).

Für das nacheinander erfolgende Einziehen, Positionieren und Aufblasen der Packer ist es erforderlich, den Schlauch für das Druckmedium bereits überirdisch durch die jeweils nachfolgenden Packer hindurchzuführen. Die TV-Kamera 18, die das Positionieren der einzelnen Packer überwacht, wird jeweils nach erfolgter Positionierung wieder zurückgefahren. Für die Praxis bedeutet das mehrfach nacheinander erfolgende Einziehen, Positionieren und Aufblasen von Packern in einer Haltung eine erhebliche Verkürzung der Wartezeiten (Aushärtung) und erlaubt eine kontinuierliche Arbeitsweise.

## Patentansprüche

1. Verfahren zum partiellen Sanieren eines im Erdreich verlegten Abwasserkanals, bei dem eine die beschädigte Zone des Abwasserkanals innen abdekkende, mit aushärtbarem Harz getränkte Fasermatte um einen mittels Druck verformbaren, schlauchförmigen Träger gelegt wird, der Außendurchmesser des Trägers erheblich kleiner ist als der Durchmesser des zu sanierenden Kanals die Länge des Trägers größer ist als die Breite der gewickelten Fasermatte, dieser Träger unter Druck die Fasermatte gesamtumfänglich an die zu sanierende Rohrwand preßt, wobei sich der Außendurchmesser der Fasermatte unter Verringerung der Überlappung ihrer Endteile auf den Innendurchmesser des Abwasserkanals vergrößert, **dadurch gekennzeichnet,** daß die dem schlauchförmigen Träger (6) zugewandt liegende, harzgetränkte Fasermattenlage am schlauchförmigen Träger (6) durch erhöhten Reibungsschluß festgelegt oder fest eingespannt und bei der durch Aufblasen des schlauchförmigen Trägers vorgenommenen Durchmesservergrößerung des Fasermattenwickels der schlauchförmige Träger mit dem Fasermattenwikkel gedreht wird und während der Durchmesservergrößerung des Wickels die Fasermattenlagen aneinandergepreßt werden und sich das dadurch verdrängte Harz in Risse (10) und in sonstige Schadensstellen des zu sanierenden Kanalrohrabschnittes preßt und an den Stirnseiten ein faserfreier Harzring (11) gebildet wird.

2. Verfahren nach Anspruch 1, dadurch gekennzeichnet, daß zur Erzielung eines erhöhten Reibungsschlusses der dem schlauchförmigen Träger zugewandt liegenden, harzgetränkten Fasermatten am Träger (6) eine Polyethylenfolie (7) zwischen dem schlauchförmigen Träger (6) und dem Fasermattenwickel angeordnet wird.

3. Verfahren nach Anspruch 2, dadurch gekennzeichnet, daß die Polyethylenfolie (7) sich über die Stirnenden des schlauchförmigen Trägers (6) erstreckt.

4. Verfahren nach Anspruch 2 oder 3, dadurch gekennzeichnet, daß der schlauchförmige Träger (6) mit einer Doppellage Polyethylenfolie (7) ummantelt wird, die an den Enden gegen Abwickeln gesichert wird.

5. Verfahren nach Anspruch 1, dadurch gekennzeichnet, daß die Wandstärke der partiellen Auskleidung durch zweifaches oder mehrfaches Wickeln der einlagigen Fasermatte oder einer mehrlagigen Fasermatte auf den verformbaren Träger (6) bestimmt wird.

6. Verfahren nach Anspruch 5, dadurch gekennzeichnet, daß zusätzlich zu dem zweifachen oder mehrfachen Wickeln der Fasermatte an dem Träger und an dem dem zu sanierenden Kanal zugewandten Ende eine Überlappung vorgesehen wird.

7. Verfahren nach Anspruch 1, dadurch gekennzeichnet, daß der für die Verschiebung der harzgetränkten Fasermattenlagen im Wickel erforderliche Innendruck des verformbaren Trägers (6) entsprechend dem Durchmesser des zu sanierenden Kanals (12), der verwendeten Fasermattenmaterialien und der Anzahl der Fasermattenlagen vor der Positionierung im Kanal (12) bestimmt und ein definierter Andruck an die zu sanierende Rohrwand festgelegt wird.

8. Verfahren nach Anspruch 1, dadurch gekennzeichnet, daß für die Fasermatten neben Variationen von Glasfasermaterialien/-geweben auch solche aus hochfesten Kohlefasern und Kevlar verwendet werden.

9. Verfahren nach Anspruch 1, dadurch gekennzeichnet, daß flachliegende Fasermatten auf der Ober- und Unterseite mit einer transpareten Polyethylenfolie abgedeckt werden, diese Folien allseits über die Fasermatten herausragen und die Fasermatten vor Auflegen der oberen Abdeckfolie mit einer für die Tränkung ausreichenden Menge Kunstharz übergossen werden und die zugeführte Harzmenge durch Handrollen, die von außen auf die Folie gedrückt werden, in die Fasermatten eingearbeitet wird, wobei Lufteinschlüsse seitlich weg von den Fasermatten in den Randbereich gedrückt werden, und daß anschließend die Fasermatten auf den schlauchförmigen Träger (6) gewickelt werden.

## Claims

1. A method of partially restoring a sewer which is laid in the ground, in which a fibre mat which internally covers the damaged zone of the sewer and which is impregnated with hardenable resin is laid around a hose-like carrier which can be deformed by means of pressure, the outside diameter of the carrier is considerably smaller than the diameter of the sewer to be restored, the length of the carrier is greater than the width of the wound fibre mat, and said carrier under pressure presses the fibre mat over its entire periphery against the sewer wall to be renovated, in which case the outside diameter of the fibre mat increases to the inside diameter of the sewer, with a reduction in the overlap of its end portions, characterised in that the resin-impregnated fibre mat layer which is towards the hose-like carrier (6) is clamped fast or fixed on the hose-like carrier (6) by increased frictional engagement and with the increase in diameter of the fibre mat winding, which is effected by inflation of the hose-like carrier, the hose-like carrier is rotated with the fibre mat winding and during the increase in diameter of the winding the layers of fibre mat are pressed against each other and the resin which is thereby displaced is pressed into cracks (10) and into other damage points in the sewer portion to be restored and a fibre-free resin ring (11) is formed at the ends.

2. A method according to claim 1 characterised in that a polyethylene foil (7) is arranged between the hose-like carrier (6) and the fibre mat winding, to produce an increased frictional engagement against the carrier (6) of the resin-impregnated fibre mats which face towards the hose-like carrier.

3. A method according to claim 2 characterised in that the polyethylene foil (7) extends over the ends of the hose-like carrier (6).

4. A method according to claim 2 or claim 3 characterised in that the hose-like carrier (6) is encased with a double layer of polyethylene foil (7) which is prevented from unwinding at the ends.

5. A method according to claim 1 characterised in that the wall thickness of the partial lining is determined by double or multiple winding of the single-layer fibre mat or a multi-layer fibre mat on to the deformable carrier (6).

6. A method according to claim 5 characterised in that overlapping is provided in addition to the double or multiple winding of the fibre mat on the carrier and at the end which is towards the sewer to be restored.

7. A method according to claim 1 characterised in that the internal pressure in the deformable carrier (6), which is required for displacement of the resin-impregnated layers of fibre mat in the winding, is determined in accordance with the diameter of the sewer (12) to be restored, the fibre mat materials used, and the number of layers of fibre mat, prior to positioning in the sewer (12), and a defined pressure against the duct wall to be restored is established.

8. A method according to claim 1 characterised in that besides variations on glass fibre materials/cloths, those comprising high-strength carbon fibres and Kevlar are also used for the fibre mats.

9. A method according to claim 1 characterised in that fibre mats which are lying in a flat condition are covered on the top and bottom sides with a transparent polyethylene foil, said foils project at all sides beyond the fibre mats and before application of the upper cover foil the fibre mats have poured over sane an amount of synthetic resin which is sufficient for impregnation thereof and the supplied amount of resin is worked into the fibre mats by hand rollers which are pressed on to the foil from the outside, air inclusions being urged laterally away from the fibre mats into the edge region, and that then the fibre mats are wound on to the hose-like carrier (6).

## Revendications

1. Procédé de réparation partielle d'une canalisation d'égout enterré, dans lequel un tapis de fibres imbibées de résine durcissable, recouvrant par l'intérieur la zone endommagée d'une canalisation d'égout, est enroulé autour d'un support en forme de tuyau, déformable sous l'effet de la pression, le diamètre extérieur du support est nettement inférieur au diamètre de la canalisation à réparer, la longueur du support est supérieure à la largeur du tapis de fibres enroulé, ce support applique le tapis de fibres, sous l'effet de la pression, par tout son pourtour, sur la paroi de tube à réparer, le diamètre extérieur du tapis de fibres, lors de la diminution du recouvrement de ses extrémités, augmentant pour atteindre le diamètre intérieur de la canalisation d'égout, caractérisé en ce que la couche de fibres imbibées de résine formant tapis, orientée en direction du support (6) en forme de tuyau, est fixée ou montée fixement sur le support (6) en forme de tuyau, grâce à une augmentation de la friction et, lors de l'augmentation de diamètre du tapis de fibres enroulées survenant lors du gonflage du support en forme de tuyau, le support en forme de tuyau tourne avec le tapis de fibres enroulées et, au cours de l'augmentation de diamètre des fibres enroulées, les couches de fibres formant tapis sont appuyées les unes contre les autres et la résine ainsi chassée s'introduit dans des fissures (10) ou autres zones endommagées de la partie de canalisation à réparer et il se forme, au niveau des faces frontales, un anneau de résine (11) dépourvu de fibres.

2. Procédé selon la revendication 1, caractérisé en ce que, pour obtenir une meilleure friction des tapis de fibres imbibées de résine disposés de façon orientée en direction du support en forme de tuyau, sur le support (6), une pellicule de polyéthylène (7) est disposée entre le support (6) en forme de tuyau et le tapis de fibres enroulées.

3. Procédé selon la revendication 2, caractérisé en ce que la pellicule de polyéthylène (7) s'étend sur les extrémités frontales du support (6) en forme de tuyau.

4. Procédé selon la revendication 2 ou 3, caractérisé en ce que le support (6) en forme de tuyau est enrobé d'une double couche de pellicule de polyéthylène (7), qui est empêchée de se dérouler aux extrémités.

5. Procédé selon la revendication 1, caractérisé en ce que l'épaisseur de paroi du revêtement partiel est déterminée par le double ou le multiple enroulement du tapis de fibres monocouche ou d'un tapis de fibres multicouches sur le support (6) déformable.

6. Procédé selon la revendication 5, caractérisé en ce qu'il est prévu un recouvrement, venant en supplément du double ou du multiple enroulement du tapis de fibres sur le tapis, et présent sur l'extrémité orientée vers la canalisation à réparer.

7. Procédé selon la revendication 1, caractérisé en ce que la pression intérieure du support (6) déformable qui est nécessaire pour le déplacement des couches de fibres imbibées de résine formant tapis et enroulées, est déterminée en fonction du diamètre de la canalisation (12) à réparer, des matériaux du tapis de fibres utilisés et du nombre de couches de tapis de fibres, avant le positionnement dans la canalisation (12) et une pression d'appui sur la paroi du tube à réparer définie est fixée.

8. Procédé selon la revendication 1, caractérisé en ce qu'outre les variantes portant sur les matériaux ou les tissus de fibres de verre destinés aux tapis en fibres, des tapis en fibres de carbone et en Kevlar très résistants sont utilisés.

9. Procédé selon la revendication 1, caractérisé en ce que des tapis de fibres reposant à plat sont recouverts, sur la face supérieure et inférieure, d'une pellicule de polyéthylène transparente, ces pellicules dépassent de tous côtés des tapis de fibres et une quantité de résine synthétique suffisante pour l'imprégnation est coulée sur les tapis de fibres, avant la pose de la pellicule de couverture supérieure, et la quantité de résine appliquée est amenée à pénétrer dans les tapis de fibres au moyen de rouleaux à main qui sont appuyés sur la pellicule, à partir de l'extérieur, les inclusions d'air étant repoussées latéralement hors des tapis de fibres, dans la zone de bordure, et en ce qu'ensuite, les tapis de fibres sont enroulés sur le support (6) en forme de tuyau.
